# FASCICULE DE BREVET EUROPEEN

(11) **EP 4 009 068 B1**
(45) Date de publication et mention de la délivrance du brevet: **31.01.2024**
(21) Numéro de dépôt: 20212057.2
(22) Date de dépôt: 04.12.2020
(51) Int. Cl.: G01S 7/02

(54) **SYSTÈME ET PROCÉDÉ D'INTERCEPTION DE SIGNAUX ÉLECTROMAGNÉTIQUES NON DISCURSIFS ÉMIS DANS UNE BANDE DE FRÉQUENCES LARGE**
SYSTEM UND VERFAHREN ZUM ABFANGEN VON NICHT-DISKURSIVEN ELEKTROMAGNETISCHEN SIGNALEN, DIE IN EINEM BREITEN FREQUENZBEREICH ÜBERTRAGEN WERDEN
SYSTEM AND METHOD FOR INTERCEPTING NON-DISCURSIVE ELECTROMAGNETIC SIGNALS EMITTED IN A WIDE FREQUENCY BAND

(43) Date de publication de la demande: 08.06.2022
(73) Titulaire: Avantix SAS, 13794 Aix-en-Provence Cedex 3 (FR)
(72) Inventeur: BUSI, Jean-Daniel, 13127 Vitrolles (FR); CHARTON, Philippe, 13100 Aix en Provence (FR)
(74) Mandataire: IPAZ

(56) Documents cités:
- EP-A1- 1 742 376
- EP-A1- 2 151 923
- GB-A- 2 511 430

## Description

### Domaine technique

L'invention concerne le domaine des radars ou systèmes analogues, spécialement adaptés pour des applications spécifiques (prospection ou détection électromagnétiques des objets, p. ex. détection au moyen d'un champ proche ou renseignement d'origine électromagnétique). En particulier, il concerne un système et son procédé associé pour l'interception de signaux électromagnétiques non discursifs émis dans une bande de fréquences large.

### Technique antérieure

L'objectif d'un intercepteur de signaux est de fournir des informations sur l'existence et la caractérisation de signaux présents dans une bande de fréquence d'intérêt.

Généralement, cette information doit être délivrée dans un temps minimum.

Pour cela, et afin d'augmenter la probabilité d'interception de signaux électromagnétiques émis dans la bande de fréquence d'intérêt, on utilise couramment des récepteurs de type large bande plutôt que des récepteurs de type bande étroite qui peuvent détecter uniquement sur la bande étroite correspondante.

Or, selon la largeur de bande à surveiller, les récepteurs de type large bande peuvent être coûteux.

Par ailleurs, ces récepteurs possèdent une sensibilité limitée liée à la largeur de la bande à écouter ainsi que la technologie utilisée, par exemple de type DLVA, qui est très délicate à réaliser.

Ainsi, les récepteurs de type large bande ne permettent pas de détecter des signaux radars à faible probabilité d'interception (« Low Probability of intercept », LPI, en anglais) dont la puissance crête émise est faible et que des signaux de puissance crête émise plus élevée peuvent masquer.

En outre, ils possèdent une capacité limitée à traiter des impulsions concomitantes sur l'ensemble du spectre de la large bande et sont aisément éblouis en présence d'un émetteur permanent (« Continuous Wave », CW, en anglais).

### Résumé de l'invention

L'invention vise à pallier ces inconvénients.

L'invention vise en particulier un système d'interception de signaux électromagnétiques non discursifs émis dans une première bande de fréquences, dite large bande. Le système comprend :
- un système antennaire configuré pour intercepter des signaux électromagnétiques émis dans une bande de fonctionnement donnée incluse dans la large bande,
- un premier récepteur, dit à bande étroite, couplé au système antennaire et configuré pour, pendant une première durée prédéterminée d'analyse,
   - détecter au moins une impulsion dans les signaux électromagnétiques interceptés par le système antennaire, et
   - générer au moins un descripteur d'impulsion pour chaque impulsion détectée, le descripteur d'impulsion comprenant une teneur informative qui caractérise l'impulsion, et
- un processeur couplé au système antennaire et au premier récepteur à bande étroite, et configuré pour :
   - fractionner fonctionnellement tout ou partie de la large bande en une pluralité de fractions de bande de fréquences,
   - commander le système antennaire pour balayer cycliquement la pluralité de fractions de bande de fréquences en adaptant successivement, pendant la première durée prédéterminée d'analyse, la bande de fonctionnement du système antennaire à au moins une fraction adjacente de bande de fréquences courante, et
   - tenter d'identifier au moins un émetteur associé aux signaux électromagnétiques interceptés par le système antennaire, à partir d'au moins un descripteur d'impulsion.

Par ailleurs, dans le système,
- la largeur de la bande de fonctionnement du premier récepteur à bande étroite est sensiblement inférieure à la largeur de la large bande et sensiblement égale à la largeur de chaque fraction adjacente de bande de fréquences, et
- la première durée prédéterminée d'analyse n'est pas suffisante pour que le premier récepteur à bande étroite puisse générer au moins un descripteur d'émetteur, le descripteur d'émetteur comprenant une teneur informative qui caractérise un émetteur des signaux électromagnétiques émis.

Dans une mise en oeuvre, le processeur est en outre configuré pour tenter d'identifier un émetteur à partir d'une liste de descripteurs d'impulsions associés à des émetteurs précédemment identifiés.

Selon l'invention, le système comprend en outre, un deuxième récepteur, dit à bande étroite, couplé au système antennaire et au processeur, le deuxième récepteur à bande étroite étant configuré pour, pendant une deuxième durée prédéterminée d'analyse, générer au moins un descripteur d'émetteur. Par ailleurs, dans le système,
- le processeur est en outre configuré pour,
   - sélectionner au moins un descripteur d'impulsions qui n'a pas permis d'identifier un émetteur associé aux signaux électromagnétiques interceptés par le système antennaire, le descripteur d'impulsions comprenant une information grossière de direction d'arrivée des signaux électromagnétiques associés, interceptés par le système antennaire,
   - commander le système antennaire pour intercepter les signaux électromagnétiques émis selon une direction qui correspond à l'information grossière de direction d'arrivée,
   - tenter d'identifier au moins un émetteur associé aux signaux électromagnétiques interceptés par le système antennaire, à partir du descripteur d'émetteur.

En outre, dans le système,
- la largeur de la bande de fonctionnement du deuxième récepteur à bande étroite est sensiblement égale à la largeur de la bande de fonctionnement du premier récepteur à bande étroite, et
- la deuxième durée prédéterminée d'analyse est sensiblement supérieure à la première durée prédéterminée de sorte que le deuxième récepteur à bande étroite puisse générer au moins un descripteur d'émetteur.

Dans une mise en oeuvre, le processeur est en outre configuré pour arrêter la tentative d'identification d'un émetteur au bout d'une durée prédéterminée de tentative.

Dans une mise en oeuvre, le deuxième récepteur à bande étroite est configuré pour, pendant une troisième durée prédéterminée d'analyse, générer au moins un descripteur d'émetteur.

Par ailleurs, dans le système,
- le processeur est en outre configuré pour,
   - sélectionner au moins un descripteur d'impulsion associé à chaque émetteur identifié, le descripteur d'impulsion comprenant une information grossière de direction d'arrivée des signaux électromagnétiques associés, interceptés par le système antennaire,
   - commander le système antennaire pour intercepter les signaux électromagnétiques émis selon une direction qui correspond à l'information grossière de direction d'arrivée,
   - assurer le pistage de chaque émetteur identifié à partir du descripteur d'émetteur.

En outre, dans le système,
- la troisième durée prédéterminée d'analyse est inférieure à la deuxième durée prédéterminée et supérieure à la première durée prédéterminée.

Dans une, mise en oeuvre, le processeur est en outre configuré pour commencer le pistage de chaque émetteur identifié lorsque le processeur n'a plus d'émetteur à identifier.

Dans une mise en oeuvre, le processeur est en outre configuré pour commander le balayage du système antennaire de manière à maintenir la bande de fonctionnement du système antennaire sur la fraction adjacente de bande de fréquences courante pendant une durée prédéterminée de balayage.

Dans une mise en oeuvre, la largeur de la bande de fonctionnement du premier récepteur à bande étroite et du deuxième récepteur à bande étroite est comprise entre Mhz et 4 Ghz, de préférence égale à 3 Ghz.

Dans une mise en oeuvre, la largeur de la large bande s'étend entre 1 GHz et 18 Ghz.

Dans une mise en oeuvre, le système antennaire comprend une pluralité d'antennes réparties en groupe, chaque groupe d'antennes étant agencé selon une forme sélectionnée parmi le groupe constitué par un demi-cercle et un demi-hexagone.

Dans une mise en oeuvre, le premier récepteur à bande étroite et le deuxième récepteur à bande étroite sont des récepteurs superhétérodynes.

Dans une mise en oeuvre, le système comprend en outre un dispositif d'affichage couplé au processeur, et configuré pour une représentation d'au moins un émetteur identifié à partir d'au moins un descripteur d'émetteur.

L'invention concerne également un procédé comprenant :
- une étape de fourniture d'un système selon l'une quelconque des mises en oeuvre précédentes, pour intercepter des signaux électromagnétiques non discursifs émis dans la large bande,
- une étape de comparaison des descripteurs d'impulsions générés par le premier récepteur à bande étroite avec une liste de descripteurs d'émetteur associés à des émetteurs précédemment identifiés,
- une étape d'insertion de descripteurs d'impulsions dans une liste d'attente ou dans une liste de pistage en fonction de la comparaison, les descripteurs d'impulsions comprenant une information grossière de direction d'arrivée des signaux électromagnétiques associés, interceptés par le système antennaire, l'étape d'insertion comprenant
   - l'insertion dans la liste d'attente des descripteurs d'impulsions qui n'ont pas permis d'identifier un émetteur associé aux signaux électromagnétiques interceptés par le système antennaire,
   - l'insertion dans la liste de pistage des descripteurs d'impulsions qui ont permis d'identifier un émetteur associé aux signaux électromagnétiques interceptés par le système antennaire, et
- une étape d'utilisation du processeur comprenant,
   - la tentative d'identification d'au moins un émetteur associé aux signaux électromagnétiques interceptés par le système antennaire, selon la liste d'attente,
   - le pistage de chaque émetteur identifié selon la liste de pistage, lorsque la liste d'attente est vide.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un système selon l'invention.
[Fig. 2] La figure 2 représente un système antennaire selon l'invention.
[Fig. 3] La figure 3 représente un procédé de mise en oeuvre de l'invention.

Les figures ne respectent pas nécessairement les échelles, notamment en épaisseur, et ce à des fins d'illustration.

### Description des modes de réalisation

L'invention propose de réaliser un intercepteur de signaux électromagnétiques émis sur une large bande, en se passant de récepteurs à large bande. À la place, l'invention propose d'utiliser un premier récepteur à bande étroite qui est capable de scanner rapidement l'ensemble de la large bande afin de détecter des émissions que l'on n'a pas encore identifiées. L'invention propose également un deuxième récepteur à bande étroite qui est capable de pister les émissions déjà identifiées. En pratique, le premier récepteur à bande étroite cherche à détecter des activités dans des bandes de fréquences et identifier des similarités entre des émissions déjà reçues et associées à un émetteur préalablement identifié. Ces informations permettent alors d'orienter le deuxième récepteur à bande étroite vers l'analyse des bandes de fréquences dans lesquelles des émissions ont été captées sans avoir pu permettre de les associer à un émetteur particulier. Ainsi, le deuxième récepteur à bande étroite permet d'obtenir plus d'infos que le premier récepteur à bande étroite sur une même bande de fréquence pour permettre une identification précise d'un émetteur. Un tel intercepteur selon l'invention, permet d'assurer une probabilité d'interception de signaux importante (p. ex. supérieur à 90 %) dans un laps de temps très court (p. ex. de l'ordre quelques secondes).

Ainsi, l'invention concerne un système d'interception de signaux électromagnétiques, dits non discursifs.

Dans un exemple, on peut installer le système selon l'invention sur un navire de surface tel qu'un porte-avions, une frégate ou un patrouilleur. Dans ce cas, on pourra installer le système sur un mât du navire de surface.

Dans un autre exemple, on peut installer le système selon l'invention sur un navire submersible tel qu'un sous-marin.

Dans encore un autre exemple, on peut installer le système selon l'invention sur un véhicule terrestre tel qu'un camion.

Enfin, dans un autre exemple, on peut installer le système selon l'invention sur un aéronef tel que ceux utilisés dans le domaine de la patrouille maritime (PATMAR).

En pratique, le système selon l'invention est passif en ce qu'il n'émet aucun signal électromagnétique, mais peut en capter. Et ce, par opposition avec un système actif qui émet des signaux électromagnétiques.

On entend par signaux électromagnétiques non discursifs, des signaux électromagnétiques qui n'ont pas pour vocation de transmettre une information entre au moins deux dispositifs.

Par exemple, un signal radar est un signal non discursif.

En effet, de manière connue, un radar est un outil de télédétection, qui repère les objets à distance. Pour cela, le radar émet des ondes puis compare les ondes réfléchies sur ces objets pour obtenir des informations sur la distance des objets, leurs vitesses, etc.

Par contre, un signal associé à une communication établie selon un protocole de communication donnée est du type discursif, car un tel signal permet de transmettre une information entre au moins deux dispositifs.

Dans l'invention, on considère que les signaux électromagnétiques non discursifs sont émis dans une première bande de fréquences, dite large bande.

On entend par large bande, une bande de fréquences comprenant une plage importante de fréquences.

Dans un premier exemple, la largeur de la large bande s'étend entre 30 GHz et 40 GHz, dans la bande dite « bande très haute », telle qu'utilisée de manière connue dans le domaine des radars.

Dans un deuxième exemple, la largeur de la large bande s'étend entre 1 GHz et 18 Ghz, dans la bande de fréquences dite « bande haute », telle qu'utilisée de manière connue dans le domaine des radars.

Dans un troisième exemple, la largeur de la large bande s'étend entre 30 MHz à 1 GHz, dans la bande de fréquences dite « bande VHF/UHF », telle qu'utilisée de manière connue dans le domaine des radars.

Dans un quatrième exemple, la largeur de la large bande est inférieure à 30 MHz, dans la bande de fréquences dite « bande HF » telle qu'utilisée de manière connue dans le domaine des radars.

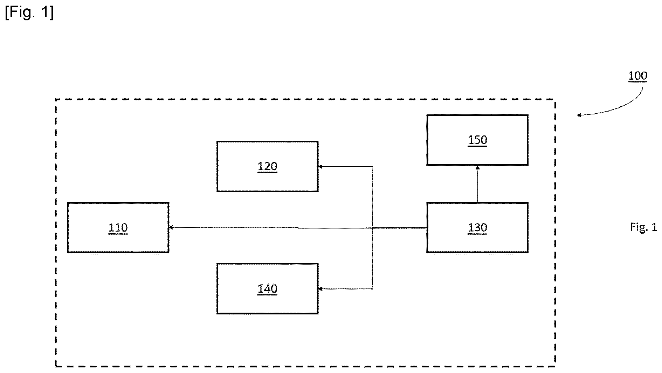

La figure 1 illustre un système 100 selon l'invention.

Dans l'exemple de la figure 1, le système 100 comprend un système antennaire 110, un premier récepteur 120, dit à bande étroite, et un processeur 130.

Dans l'invention, le système antennaire 110 est configuré pour intercepter des signaux électromagnétiques émis dans une bande de fonctionnement donnée incluse dans la large bande.

Par ailleurs, le système antennaire 110 est configuré pour changer de bande d'écoute selon une durée prédéterminée de changement d'écoute. Par exemple, la durée prédéterminée de changement d'écoute est comprise entre 0,5 ms et 20 ms. Toutefois, d'autres valeurs peuvent être envisagées selon la largeur de bande du récepteur, et ce, sans nécessiter de modifications substantielles de l'invention.

Dans une mise en oeuvre particulière, le système antennaire 110 comprend une pluralité d'antennes de type connu qui sont réparties en groupe.

Dans un exemple de cette mise en oeuvre particulière, chaque groupe d'antennes est agencé selon une forme sélectionnée parmi le groupe constitué par un demi-cercle et un demi-hexagone.

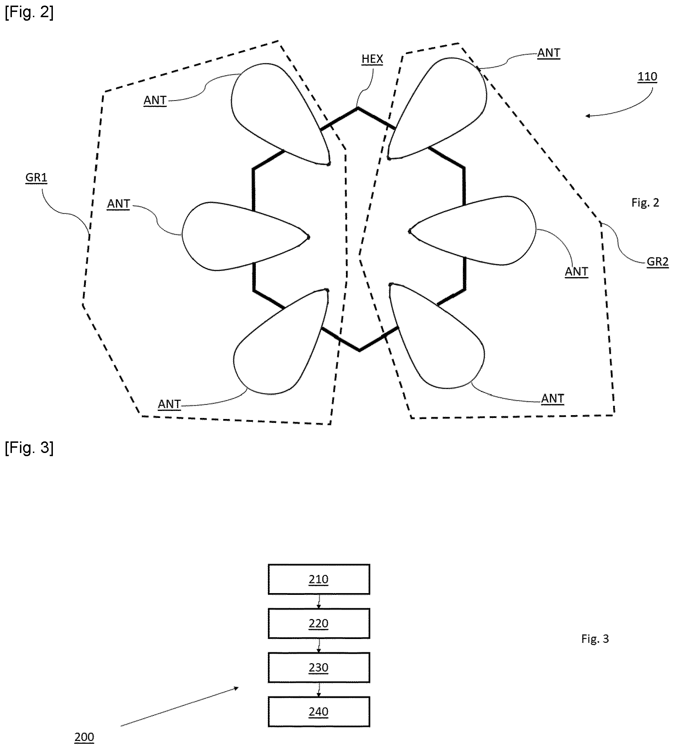

L'exemple de la figure 2 illustre l'agencement de six antennes ANT positionnées sur les six facettes d'un système antennaire 110 agencé selon la forme d'un hexagone HEX. Ainsi, cette configuration comprend deux groupes GR1, GR2 de trois antennes ANT, et dans laquelle, chaque groupe GR1, GR2 est agencé selon la forme d'un demi-hexagone. Avec une telle mise en oeuvre, on pourra simuler une antenne omnidirectionnelle, par exemple grâce à l'utilisation d'antennes directionnelle qui possède chacune 60° d'ouverture angulaire.

Toutefois, le système antennaire 110 peut comprendre deux, trois, quatre, cinq ou plus de six antennes qui sont agencées selon d'autres formes géométriques, et ce, sans nécessiter de modifications substantielles de l'invention.

Dans une mise en oeuvre, le système antennaire 110 comprend une antenne omnidirectionnelle de type connue.

Dans une mise en oeuvre particulière, on pourra coupler le système antennaire 110 à une pluralité d'étages analogiques de type connu, et ce, afin d'améliorer le rapport signal sur bruit en provenance du système antennaire 110. De tels étages analogiques permettront également de filtrer le signal utile.

De retour à l'exemple de la figure 1, le premier récepteur à bande étroite 120 est couplé au système antennaire 110.

Dans une mise en oeuvre particulière, le premier récepteur à bande étroite 120 comprend une ou plusieurs voies de réception.

Par exemple, dans le cas de la mise en oeuvre de la figure 2, le premier récepteur à bande étroite 120 peut comprendre trois voies de réception que l'on couple aux sorties des six antennes ANT du système antennaire 110. Dans ce cas, grâce à l'utilisation d'un switch de type connu (non représenté), on peut activer simultanément un nombre prédéterminé d'antennes ANT à la fois parmi les six antennes ANT que comprend le système antennaire 110. Par exemple, on peut décider d'activer simultanément trois antennes ANT parmi l'ensemble les six antennes ANT que comprend le système antennaire 110. En d'autres termes, dans ce cas, seules trois antennes ANT seront aptes à intercepter simultanément des signaux électromagnétiques à un moment d'interception donné.

Toutefois, on peut envisager d'autres agencements du nombre de voies du premier récepteur à bande étroite 120 et du nombre d'antennes ANT à activer simultanément, sans nécessiter de modifications substantielles de l'invention.

Dans un premier exemple, le premier récepteur à bande étroite 120 est un récepteur superhétérodyne de type connu, à savoir un récepteur capable de translater un signal reçu sur une fréquence intermédiaire fixe à des fins d'échantillonnage et d'analyse. En outre, ce type de récepteur est connu pour être capable d'assurer de grandes sensibilités et sélectivités fréquentielles pour pouvoir séparer des signaux proches en fréquence. En effet, on connaît des récepteurs superhétérodynes qui possèdent une sensibilité de l'ordre de -75 dBmi jusqu'à -95 dBmi. Ainsi, avec l'utilisation de récepteurs de ce type, le système 100 est capable de détecter les signaux radars à faible probabilité d'interception (« Low Probability of intercept », LPI, en anglais) dont la puissance crête émise est faible et que des signaux de puissance crête émise plus élevée peuvent masquer. Or, les systèmes qui utilisent des récepteurs à large bande ne peuvent détecter les signaux radars à faible probabilité d'interception, car les récepteurs à large bande possèdent une sensibilité trop limitée.

Dans un deuxième exemple, la largeur de la bande de fonctionnement du premier récepteur à bande étroite 120 est comprise entre 500 Mhz et 4 Ghz, de préférence égale à 3 Ghz. Ainsi, dans le cas où le premier récepteur à bande étroite 120 comprend trois voies de réception, la largeur de la bande de fonctionnement du premier récepteur à bande étroite 120 correspond à la largeur de bande de fonctionnement de chacune de ses voies. Par exemple, si la largeur de bande de fonctionnement du premier récepteur à bande étroite 120 est de 3 Ghz, chacune des voies pourra utiliser une même bande de fonctionnement de 3 Ghz.

Bien sûr, la largeur de la bande de fonctionnement du premier récepteur à bande étroite 120 peut comprendre d'autres valeurs sans nécessiter de modifications substantielles de l'invention.

Toutefois, on notera que dans l'invention, la largeur de la bande de fonctionnement du premier récepteur à bande étroite 120 est sensiblement inférieure à la largeur de la large bande.

Par ailleurs, le premier récepteur à bande étroite 120 est configuré pour, pendant une première durée prédéterminée d'analyse, analyser les signaux électromagnétiques interceptés par le système antennaire 110.

En particulier, lors de cette analyse, le premier récepteur à bande étroite 120 est configuré pour détecter au moins une impulsion dans les signaux électromagnétiques interceptés par le système antennaire 110. Pour cela, de manière connue, le premier récepteur à bande étroite 120 élimine le bruit entre les impulsions de manière à pouvoir extraire des impulsions qui possèdent le rapport signal sur bruit le plus faible possible sans pour autant faire de fausses détections.

Puis, lors de cette analyse, le premier récepteur à bande étroite 120 est aussi configuré pour générer au moins un descripteur d'impulsion (« Pulse Description Word, PDW», en anglais) pour chaque impulsion détectée.

On entend par descripteur d'impulsion, un descripteur d'au moins une impulsion qui comprend une teneur informative qui caractérise l'impulsion.

Ainsi, on comprendra que la première durée prédéterminée d'analyse n'est pas suffisante pour que le premier récepteur à bande étroite 120 puisse générer au moins un descripteur d'émetteur (« Emitter Description Word, EDW», en anglais), un descripteur d'émetteur comprenant une teneur informative qui caractérise un émetteur des signaux électromagnétiques émis.

Dans un exemple, le descripteur est un fichier qui comprend un format prédéterminé. Un tel fichier peut comprendre les informations choisies parmi : l'heure de fin, l'offset en fréquence, l'offset en amplitude, la fréquence de l'impulsion, l'amplitude de l'impulsion, la durée de l'impulsion, l'instant d'arrivée de l'impulsion, la modulation interne de l'impulsion, la position géographique de l'impulsion, l'intervalle de répétition d'impulsion, la fréquence de répétition d'impulsion et la direction d'arrivée de l'impulsion.

Toujours, dans l'exemple de la figure 1, le processeur 130 est couplé au système antennaire 110 et au premier récepteur à bande étroite 120.

De manière connue, le processeur 130 comporte un calculateur du type CPU (« Central Processing Unit », en anglais) et, optionnellement, un dispositif accélérateur de calculs tel qu'un processeur GPU (« Graphics Processing Unit», en anglais), un processeur TPU (« tensor processing unit », en anglais), un processeur DSP (« digital signal processor», en anglais) ou un processeur FPGA (« Field Programmable Gate Array », en anglais). Par ailleurs, les ressources de calcul du processeur 130 peuvent être locales (embarquées) et/ou être accédées à distance (« Cloud Computing » ou informatique dans les nuages).

Le processeur 130 est configuré pour fractionner fonctionnellement tout ou partie de la large bande en une pluralité de fractions de bande de fréquences.

En d'autres termes, dans l'invention, le processeur 130 considère que la large bande est composée de plusieurs portions de bande de fréquences.

Dans l'invention, la largeur de la bande de fonctionnement du premier récepteur à bande étroite 120 est sensiblement égale à la largeur de chaque fraction adjacente de bande de fréquences.

Dans une mise en oeuvre particulière, les fractions de bande de fréquences, prises deux à deux, se recouvrent selon un taux recouvrement prédéterminé.

Dans une autre mise en oeuvre particulière, les fractions de bande de fréquences, prises deux à deux, sont adjacentes et positionnées côte à côte.

Dans une autre mise en oeuvre particulière, les fractions de bande de fréquences ne sont adjacentes ni positionnées côte à côte. De cette manière, il est possible de n'écouter que les fractions de bande de fréquences qui ont de l'intérêt, et qui ne sont pas nécessairement adjacentes.

Ensuite, le processeur 130 est configuré pour commander le système antennaire 110 pour balayer cycliquement la pluralité de fractions de bande de fréquences en adaptant successivement, pendant la première durée prédéterminée d'analyse, la bande de fonctionnement du système antennaire 110 à au moins une fraction adjacente de bande de fréquences courante. De cette manière, on peut réaliser un balayage à 360° autour du vecteur sur lequel on a monté le système antennaire 110.

Par exemple, dans le cas de la mise en oeuvre de la figure 2 combinée au cas où le premier récepteur à bande étroite 120 comprend trois voies de réception, les trois antennes ANT sont configurées pour écouter la même fraction adjacente de bande de fréquences courante..

Dans un exemple, le processeur 130 est en outre configuré pour commander le balayage du système antennaire 110 de manière à maintenir la bande de fonctionnement du système antennaire 110 sur la fraction adjacente de bande de fréquences courante pendant une durée prédéterminée de balayage. Par exemple, la durée prédéterminée de balayage est comprise entre 0,5 ms et 20 ms, de préférence égale à 1 ms. Toutefois, d'autres valeurs peuvent être envisagées, et ce, sans nécessiter de modifications substantielles de l'invention.

Bien sûr, on peut envisager d'autres valeurs de durée prédéterminée sans nécessiter de modifications substantielles de l'invention.

En effet, l'objectif principal de cette valeur est de permettre le balayage de la large bande à de multiples reprises de manière à intercepter suffisamment de signaux électromagnétiques pour que le système 100 réalise une probabilité d'interception de signaux élevée. En effet, en augmentant les occurrences statistiques et le temps moyen de rencontre entre le premier récepteur à bande étroite 120 et les signaux électromagnétiques qui proviennent d'un même émetteur, on augmente également la probabilité d'interception.

Enfin, le processeur 130 est configuré pour tenter d'identifier au moins un émetteur associé aux signaux électromagnétiques interceptés par le système antennaire 110, à partir d'au moins un descripteur d'impulsion.

Dans une mise en oeuvre particulière, le processeur 130 est en outre configuré pour tenter d'identifier un émetteur à partir d'une liste de descripteurs d'impulsions associés à des émetteurs précédemment identifiés.

Dans un exemple, les émetteurs précédemment identifiés sont enregistrés dans une base de données. On pourra obtenir une telle base de données grâce à un système de renseignement d'origine électromagnétique de type ELINT (« Electronic Intelligence », en anglais).

Ainsi, le processeur 130 peut identifier un émetteur précédemment identifié en fonction de la comparaison entre au moins un descripteur d'impulsion récemment généré par le premier récepteur à bande étroite 120 et au moins un descripteur d'impulsion associé à l'émetteur.

Dans une autre mise en oeuvre particulière, le processeur 130 est en outre configuré pour arrêter la tentative d'identification d'un émetteur au bout d'une durée prédéterminée de tentative.

Grâce à l'invention, on peut ainsi obtenir des performances élevées de probabilité d'interception de signaux avec un récepteur à bande étroite, et ce même si l'on n'écoute pas en permanence l'ensemble de la large bande.

Le système 100 comprend en outre, un deuxième récepteur 140, dit à bande étroite similaire au premier récepteur à bande étroite 120.

Selon l'invention, on introduit un deuxième récepteur à bande étroite 140 pour le dédier à l'analyse plus fine des nouvelles émissions électromagnétiques.

Ainsi, dans un exemple, le deuxième récepteur à bande étroite 140 est un récepteur superhétérodyne et la largeur de la bande de fonctionnement du deuxième récepteur à bande étroite 140 est comprise entre 500 Mhz et 4 Ghz, de préférence égale à 3 Ghz.

En outre, la largeur de la bande de fonctionnement du deuxième récepteur à bande étroite 140 est sensiblement égale à la largeur de la bande de fonctionnement du premier récepteur à bande étroite 120.

En pratique, le deuxième récepteur à bande étroite 140 est couplé au système antennaire 110 et au processeur 130.

Par ailleurs, le deuxième récepteur à bande étroite 140 est configuré pour, pendant une deuxième durée prédéterminée d'analyse, générer au moins un descripteur d'émetteur.

Comme indiqué plus haut, un descripteur d'émetteur comprend une teneur informative qui caractérise un émetteur. Pour cela, la deuxième durée prédéterminée d'analyse est sensiblement supérieure à la première durée prédéterminée de sorte que le deuxième récepteur à bande étroite 140 puisse générer au moins un descripteur d'émetteur.

Afin de permettre la génération du descripteur d'émetteur, le processeur 130 est configuré pour sélectionner au moins un descripteur d'impulsions, généré par le premier récepteur à bande étroite 120, et qui n'a pas permis d'identifier un émetteur associé aux signaux électromagnétiques interceptés par le système antennaire 110.

Dans ce cas, le descripteur d'impulsions comprend une information grossière de direction d'arrivée des signaux électromagnétiques associés. De manière connue, le premier récepteur à bande étroite 120 peut déterminer la direction d'arrivée de signaux électromagnétiques grâce à des techniques connues de type goniométrie d'amplitude et d'interférométrie à base courte, moyenne ou longue.

Ensuite, le processeur 130 est aussi configuré pour commander le système antennaire 110 pour intercepter les signaux électromagnétiques émis selon une direction qui correspond à l'information grossière de direction d'arrivée.

Enfin, le processeur 130 est configuré pour tenter d'identifier au moins un émetteur associé aux signaux électromagnétiques interceptés par le système antennaire 110, à partir du descripteur d'émetteur, généré par le deuxième récepteur à bande étroite 140.

Dans une mise en oeuvre particulière, le processeur 130 est en outre configuré pour arrêter la tentative d'identification d'un émetteur au bout d'une durée prédéterminée de tentative.

Dans une mise en œuvre, le deuxième récepteur à bande étroite 140 est également configuré pour, pendant une troisième durée prédéterminée d'analyse, générer au moins un descripteur d'émetteur.

Toutefois, la troisième durée prédéterminée d'analyse est inférieure à la deuxième durée prédéterminée et supérieure à la première durée prédéterminée.

Dans la deuxième mise en oeuvre de l'invention, on utilise le deuxième récepteur à bande étroite 140 pour assurer le pistage (« tracking », en anglais) de chaque émetteur identifié.

Aussi, afin de permettre la génération du descripteur d'émetteur, le processeur 130 est configuré pour sélectionner au moins un descripteur d'impulsion associé à chaque émetteur identifié. Le descripteur d'impulsions comprend une information grossière de direction d'arrivée des signaux électromagnétiques associés, interceptés par le système antennaire 110.

Ensuite, le processeur 130 est aussi configuré pour commander le système antennaire 110 pour intercepter les signaux électromagnétiques émis selon une direction qui correspond à l'information grossière de direction d'arrivée.

Enfin, le processeur 130 est configuré pour assurer le pistage de chaque émetteur identifié à partir du descripteur d'émetteur généré par le deuxième récepteur à bande étroite 140.

Dans une mise en oeuvre particulière, le processeur 130 est en outre configuré pour commencer le pistage de chaque émetteur identifié lorsque le processeur 130 n'a plus d'émetteur à identifier.

Dans une autre mise en oeuvre particulière, le système 100 comprend en outre un dispositif d'affichage 150 couplé au processeur 130.

Le dispositif d'affichage 150 est de type connu, et est configuré pour tracer une représentation d'au moins un émetteur identifié à partir d'au moins un descripteur d'émetteur.

Dans un exemple, le dispositif d'affichage 150 représente un émetteur identifié par un symbole positionné sur une carte géographique.

Dans un autre exemple, le dispositif d'affichage 150 représente un émetteur identifié par un symbole positionné selon une vue panoramique à angle d'élévation constant (« Plan Position Indicator», PPI, en anglais).

Toutefois, on peut envisager d'autres représentations sans nécessiter de modifications substantielles de l'invention.

L'invention concerne également un procédé 200 comme illustré dans la figure 3.

En particulier, dans une étape 210, le procédé 200 fournit un système 100 selon l'invention, pour intercepter des signaux électromagnétiques non discursifs émis dans la large bande.

Ensuite, dans une étape 220, le procédé 200 compare des descripteurs d'impulsions générés par le premier récepteur à bande étroite 120 avec une liste de descripteurs d'impulsions associés à des émetteurs précédemment identifiés.

Puis, dans une étape 230, le procédé 200 insère des descripteurs d'impulsions dans une liste d'attente ou dans une liste de pistage en fonction de la comparaison. Dans ce cas, comme indiqué plus haut, les descripteurs d'impulsions comprennent une information grossière de direction d'arrivée des signaux électromagnétiques associés, interceptés par le système antennaire 110.

En pratique, le procédé 200 insère dans la liste d'attente, des descripteurs d'impulsions qui n'ont pas permis d'identifier un émetteur associé aux signaux électromagnétiques interceptés par le système antennaire 110.

Autrement, le procédé 200 insère dans la liste de pistage, des descripteurs d'impulsions qui ont permis d'identifier un émetteur associé aux signaux électromagnétiques interceptés par le système antennaire 110.

Enfin, dans une étape 240, le procédé 200 utilise le processeur 130 pour tenter d'identifier au moins un émetteur associé aux signaux électromagnétiques interceptés par le système antennaire 110, selon la liste d'attente.

Aussi, dans l'étape 240, le procédé 200 utilise le processeur 130 pour pister chaque émetteur identifié selon la liste de pistage, lorsque la liste d'attente est vide.

Nous avons décrit et illustré l'invention. Toutefois, l'invention ne se limite pas aux formes de réalisations que nous avons présentées. Ainsi, un expert du domaine peut déduire d'autres variantes et modes de réalisation, à la lecture de la description et des figures annexées.

Par exemple, nous avons décrit le système 100 avec un unique premier récepteur à bande étroite 120. Toutefois, on pourra utiliser plusieurs premiers récepteurs à bande étroite 120 en parallèle afin d'augmenter la probabilité d'interception de signaux.

L'invention peut faire l'objet de nombreuses variantes et applications autres que celles décrites ci-dessus. En particulier, sauf indication contraire, les différentes caractéristiques structurelles et fonctionnelles de chacune des mises en oeuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Système (100) d'interception de signaux électromagnétiques non discursifs émis dans une première bande de fréquences, dite large bande, le système comprenant :
- un système antennaire (110) configuré pour intercepter des signaux électromagnétiques émis dans une bande de fonctionnement donnée incluse dans la large bande ;
- un premier récepteur (120), dit à bande étroite, couplé au système antennaire (110) et configuré pour, pendant une première durée prédéterminée d'analyse,
• détecter au moins une impulsion dans les signaux électromagnétiques interceptés par le système antennaire (110), et
• générer au moins un descripteur d'impulsion pour chaque impulsion détectée, le descripteur d'impulsion comprenant une teneur informative qui caractérise l'impulsion ; et
- un processeur (130) couplé au système antennaire (110) et au premier récepteur à bande étroite (120), et configuré pour :
• fractionner fonctionnellement tout ou partie de la large bande en une pluralité de fractions de bande de fréquences,
• commander le système antennaire (110) pour balayer cycliquement la pluralité de fractions de bande de fréquences en adaptant successivement, pendant la première durée prédéterminée d'analyse, la bande de fonctionnement du système antennaire (110) à au moins une fraction adjacente de bande de fréquences courante, et
• tenter d'identifier au moins un émetteur associé aux signaux électromagnétiques interceptés par le système antennaire (110), à partir d'au moins un descripteur d'impulsion ;
dans lequel :
- la largeur de la bande de fonctionnement du premier récepteur à bande étroite (120) est sensiblement inférieure à la largeur de la large bande et sensiblement égale à la largeur de chaque fraction adjacente de bande de fréquences, et
- la première durée prédéterminée d'analyse n'est pas suffisante pour que le premier récepteur à bande étroite (120) puisse générer au moins un descripteur d'émetteur, le descripteur d'émetteur comprenant une teneur informative qui caractérise un émetteur des signaux électromagnétiques émis,
**caractérisé en ce que** ledit système comprend en outre, un deuxième récepteur (140), dit à bande étroite, couplé au système antennaire (110) et au processeur (130), le deuxième récepteur à bande étroite (140) étant configuré pour, pendant une deuxième durée prédéterminée d'analyse, générer au moins un descripteur d'émetteur, dans lequel ledit processeur (130) est en outre configuré pour,
- sélectionner au moins un descripteur d'impulsions qui n'a pas permis d'identifier un émetteur associé aux signaux électromagnétiques interceptés par le système antennaire (110), le descripteur d'impulsions comprenant une information grossière de direction d'arrivée des signaux électromagnétiques associés, interceptés par le système antennaire (110),
- commander le système antennaire (110) pour intercepter les signaux électromagnétiques émis selon une direction qui correspond à l'information grossière de direction d'arrivée,
- tenter d'identifier au moins un émetteur associé aux signaux électromagnétiques interceptés par le système antennaire (110), à partir du descripteur d'émetteur ;
dans lequel,
- la largeur de la bande de fonctionnement du deuxième récepteur à bande étroite (140) est sensiblement égale à la largeur de la bande de fonctionnement dudit premier récepteur à bande étroite (120), et
- la deuxième durée prédéterminée d'analyse est sensiblement supérieure à la première durée prédéterminée de sorte que le deuxième récepteur à bande étroite (140) puisse générer au moins un descripteur d'émetteur.

2. Système (100) selon la revendication 1, dans lequel le processeur (130) est en outre configuré pour tenter d'identifier un émetteur à partir d'une liste de descripteurs d'impulsions associés à des émetteurs précédemment identifiés.

3. Système (100) selon l'une quelconque des revendications précédentes, dans lequel le processeur (130) est en outre configuré pour arrêter la tentative d'identification d'un émetteur au bout d'une durée prédéterminée de tentative.

4. Système (100) selon l'une quelconque des revendications précédentes, dans lequel, le deuxième récepteur à bande étroite (140) est configuré pour, pendant une troisième durée prédéterminée d'analyse, générer au moins un descripteur d'émetteur, dans lequel, le processeur (130) est en outre configuré pour,
- sélectionner au moins un descripteur d'impulsion associé à chaque émetteur identifié, le descripteur d'impulsion comprenant une information grossière de direction d'arrivée des signaux électromagnétiques associés, interceptés par le système antennaire (110),
- commander le système antennaire (110) pour intercepter les signaux électromagnétiques émis selon une direction qui correspond à l'information grossière de direction d'arrivée,
- assurer le pistage de chaque émetteur identifié à partir du descripteur d'émetteur,
dans lequel, la troisième durée prédéterminée d'analyse est inférieure à la deuxième durée prédéterminée et supérieure à la première durée prédéterminée.

5. Système (100) selon la revendication précédente, dans lequel le processeur (130) est en outre configuré pour commencer le pistage de chaque émetteur identifié lorsque le processeur (130) n'a plus d'émetteur à identifier.

6. Système (100) selon l'une quelconque des revendications précédentes, dans lequel le processeur (130) est en outre configuré pour commander le balayage du système antennaire (110) de manière à maintenir la bande de fonctionnement du système antennaire (110) sur la fraction adjacente de bande de fréquences courante pendant une durée prédéterminée de balayage.

7. Système (100) selon l'une quelconque des revendications précédentes, dans lequel la largeur de la bande de fonctionnement du premier récepteur à bande étroite (120) et du deuxième récepteur à bande étroite (140) est comprise entre (500) Mhz et 4 Ghz, de préférence égale à 3 Ghz.

8. Système (100) selon l'une quelconque des revendications précédentes, dans lequel la largeur de la large bande s'étend entre 1 GHz et 18 Ghz.

9. Système (100) selon l'une quelconque des revendications précédentes, dans lequel le système antennaire (110) comprenant une pluralité d'antennes réparties en groupe, chaque groupe d'antennes étant agencé selon une forme sélectionnée parmi le groupe constitué par un demi-cercle et un demi-hexagone.

10. Système (100) selon l'une quelconque des revendications précédentes, dans lequel le premier récepteur à bande étroite (120) et le deuxième récepteur à bande étroite (140) sont des récepteurs superhétérodynes.

11. Système (100) selon l'une quelconque des revendications précédentes, comprenant en outre un dispositif d'affichage (150) couplé au processeur (130), et configuré pour une représentation d'au moins un émetteur identifié à partir d'au moins un descripteur d'émetteur.

12. Procédé (200) comprenant :
- une étape de fourniture (210) d'un système selon l'une quelconque des revendications précédentes, pour intercepter des signaux électromagnétiques non discursifs émis dans la large bande,
- une étape de comparaison (220) des descripteurs d'impulsions générés par le premier récepteur à bande étroite (120) avec une liste de descripteurs d'émetteur associés à des émetteurs précédemment identifiés,
- une étape d'insertion (230) de descripteurs d'impulsions dans une liste d'attente ou dans une liste de pistage en fonction de la comparaison, les descripteurs d'impulsions comprenant une information grossière de direction d'arrivée des signaux électromagnétiques associés, interceptés par le système antennaire (110), l'étape d'insertion (230) comprenant
• l'insertion dans la liste d'attente des descripteurs d'impulsions qui n'ont pas permis d'identifier un émetteur associé aux signaux électromagnétiques interceptés par le système antennaire (110),
• l'insertion dans la liste de pistage des descripteurs d'impulsions qui ont permis d'identifier un émetteur associé aux signaux électromagnétiques interceptés par le système antennaire (110), et
- une étape d'utilisation (240) du processeur (130) comprenant,
• la tentative d'identification d'au moins un émetteur associé aux signaux électromagnétiques interceptés par le système antennaire (110), selon la liste d'attente,
• le pistage de chaque émetteur identifié selon la liste de pistage, lorsque la liste d'attente est vide.

## Patentansprüche

1. System (100) zum Abfangen von nicht-diskursiven elektromagnetischen Signalen, die in einem ersten Frequenzband, dem sogenannten Breitband, gesendet werden, wobei das System umfasst:
- ein Antennensystem (110), das dazu konfiguriert ist, elektromagnetische Signale abzufangen, die in einem bestimmten Betriebsband gesendet werden, das im Breitband enthalten ist;
- einen ersten Empfänger (120), den sogenannten Schmalbandempfänger, der mit dem Antennensystem (110) gekoppelt und dazu konfiguriert ist, während einer ersten vorbestimmten Analysedauer
• mindestens einen Impuls in den vom Antennensystem (110) abgefangenen elektromagnetischen Signalen zu erkennen, und
• mindestens einen Impulsdeskriptor für jeden erkannten Impuls zu erzeugen, wobei der Impulsdeskriptor einen Informationsgehalt umfasst, der den Impuls charakterisiert; und
- einen Prozessor (130), der mit dem Antennensystem (110) und dem ersten Schmalbandempfänger (120) gekoppelt ist und konfiguriert ist zum:
• funktionalen Fraktionieren des gesamten oder eines Teils des Breitbands in eine Vielzahl von Frequenzbandfraktionen,
• Steuern des Antennensystems (110), um die Vielzahl von Frequenzbandfraktionen zyklisch abzutasten, indem während der ersten vorbestimmten Analysedauer das Betriebsband des Antennensystems (110) sukzessiv an mindestens eine aktuelle benachbarte Frequenzbandfraktion angepasst wird, und
• Versuchen, mindestens einen Sender zu identifizieren, der den von dem Antennensystem (110) abgefangenen elektromagnetischen Signalen zugeordnet ist, ausgehend von mindestens einem Impulsdeskriptor;
wobei:
- die Breite des Betriebsbandes des ersten Schmalbandempfängers (120) im Wesentlichen kleiner als die Breite des Breitbandes und im Wesentlichen gleich der Breite jeder benachbarten Frequenzbandfraktion ist, und
- die erste vorbestimmte Analysedauer nicht ausreichend ist, damit der erste Schmalbandempfänger (120) mindestens einen Senderdeskriptor erzeugen kann, wobei der Senderdeskriptor einen Informationsgehalt umfasst, der einen Sender der gesendeten elektromagnetischen Signale charakterisiert,
**dadurch gekennzeichnet, dass** das System ferner einen zweiten Empfänger (140), den sogenannten Schmalbandempfänger umfasst, der mit dem Antennensystem (110) und dem Prozessor (130) gekoppelt ist, wobei der zweite Schmalbandempfänger (140) dazu konfiguriert ist, während einer zweiten vorbestimmten Analysedauer mindestens einen Senderdeskriptor zu erzeugen, wobei der Prozessor (130) ferner konfiguriert ist zum:
- Auswählen mindestens eines Impulsdeskriptors, der nicht zugelassen hat, einen Sender zu identifizieren, der den von dem Antennensystem (110) abgefangenen elektromagnetischen Signalen zugeordnet ist, wobei der Impulsdeskriptor eine grobe Ankunftsrichtungsinformation der zugeordneten elektromagnetischen Signale umfasst, die von dem Antennensystem (110) abgefangen wurden,
- Steuern des Antennensystems (110), um elektromagnetische Signale abzufangen, die in einer Richtung gesendet werden, die der groben Ankunftsrichtungsinformation entspricht,
- Versuchen, ausgehend von dem Senderdeskriptor mindestens einen Sender zu identifizieren, der den von dem Antennensystem (110) abgefangenen elektromagnetischen Signalen zugeordnet ist;
wobei,
- die Breite des Betriebsbandes des zweiten Schmalbandempfängers (140) im Wesentlichen gleich der Breite des Betriebsbandes des ersten Schmalbandempfängers (120) ist, und
- die zweite vorbestimmte Analysedauer im Wesentlichen größer als die erste vorbestimmte Dauer ist, so dass der zweite Schmalbandempfänger (140) mindestens einen Senderdeskriptor erzeugen kann.

2. System (100) nach Anspruch 1, wobei der Prozessor (130) ferner dazu konfiguriert ist, zu versuchen, einen Sender ausgehend von einer Liste von Impulsdeskriptoren zu identifizieren, die den zuvor identifizierten Sendern zugeordnet sind.

3. System (100) nach einem der vorstehenden Ansprüche, wobei der Prozessor (130) ferner dazu konfiguriert ist, den Versuch, einen Sender zu identifizieren, am Ende einer vorbestimmten Versuchsdauer zu beenden.

4. System (100) nach einem der vorstehenden Ansprüche, wobei der zweite Schmalbandempfänger (140) dazu konfiguriert ist, während einer dritten vorbestimmten Analysedauer mindestens einen Senderdeskriptor zu erzeugen, wobei der Prozessor (130) ferner konfiguriert ist zum:
- Auswählen mindestens eines Impulsdeskriptors, der jedem identifizierten Sender zugeordnet ist, wobei der Impulsdeskriptor eine grobe Ankunftsrichtungsinformation der zugeordneten elektromagnetischen Signale umfasst, die von dem Antennensystem (110) abgefangen werden,
- Steuern des Antennensystems (110), um elektromagnetische Signale abzufangen, die in einer Richtung gesendet werden, die der groben Ankunftsrichtungsinformation entspricht,
- Sicherstellen der Verfolgung jedes Senders, der ausgehend von dem Senderdeskriptor identifiziert wurde, wobei die dritte vorbestimmte Analysedauer kleiner als die zweite vorbestimmte Analysedauer und größer als die erste vorbestimmte Analysedauer ist.

5. System (100) nach dem vorstehenden Anspruch, wobei der Prozessor (130) ferner dazu konfiguriert ist, die Verfolgung jedes identifizierten Senders zu beginnen, wenn der Prozessor (130) keinen Sender mehr zu identifizieren hat.

6. System (100) nach einem der vorstehenden Ansprüche, wobei der Prozessor (130) ferner dazu konfiguriert ist, das Abtasten des Antennensystems (110) derart zu steuern, dass das Betriebsband des Antennensystems (110) während einer vorbestimmten Abtastdauer auf der aktuellen benachbarten Frequenzbandfraktion gehalten wird.

7. System (100) nach einem der vorstehenden Ansprüche, wobei die Betriebsbandbreite des ersten Schmalbandempfängers (120) und des zweiten Schmalbandempfängers (140) zwischen (500) Mhz und 4 Ghz liegt, vorzugsweise gleich 3 Ghz ist.

8. System (100) nach einem der vorstehenden Ansprüche, wobei die Breite des Breitbands zwischen 1 GHz und 18 Ghz liegt.

9. System (100) nach einem der vorstehenden Ansprüche, wobei das Antennensystem (110) eine Vielzahl von Antennen umfasst, die in Gruppen aufgeteilt sind, wobei jede Antennengruppe in einer Form angeordnet ist, die aus der Gruppe ausgewählt ist, die aus einem Halbkreis und einem Halbhexagon besteht.

10. System (100) nach einem der vorstehenden Ansprüche, wobei der erste Schmalbandempfänger (120) und der zweite Schmalbandempfänger (140) Superheterodyn-Empfänger sind.

11. System (100) nach einem der vorstehenden Ansprüche, ferner umfassend eine Anzeigevorrichtung (150), die mit dem Prozessor (130) gekoppelt und für eine Darstellung mindestens eines Senders konfiguriert ist, der ausgehend von mindestens einem Senderdeskriptor identifiziert wurde.

12. Verfahren (200), umfassend:
- einen Schritt des Bereitstellens (210) eines Systems nach einem der vorstehenden Ansprüche, um nicht-diskursive elektromagnetische Signale abzufangen, die in das Breitband gesendet werden,
- einen Schritt des Vergleichens (220) der von dem ersten Schmalbandempfänger (120) erzeugten Impulsdeskriptoren mit einer Liste von Senderdeskriptoren, die den zuvor identifizierten Sendern zugeordnet sind,
- einen Schritt des Einfügens (230) von Impulsdeskriptoren in eine Warteliste oder eine Verfolgungsliste in Abhängigkeit von dem Vergleich, wobei die Impulsdeskriptoren eine grobe Ankunftsrichtungsinformation der zugeordneten elektromagnetischen Signale umfassen, die von dem Antennensystem (110) abgefangen werden, wobei der Schritt des Einfügens (230) umfasst:
• das Einfügen der Impulsdeskriptoren in die Warteliste, die es nicht zugelassen haben, einen Sender zu identifizieren, der den von dem Antennensystem (110) abgefangenen elektromagnetischen Signalen zugeordnet ist,
• das Einfügen der Impulsdeskriptoren in die Verfolgungsliste, die es zugelassen haben, einen Sender zu identifizieren, der den von dem Antennensystem (110) abgefangenen elektromagnetischen Signalen zugeordnet ist, und
- einen Schritt der Verwendung (240) des Prozessors (130), umfassend:
• den Versuch, mindestens einen Sender zu identifizieren, der den von dem Antennensystem (110) abgefangenen elektromagnetischen Signalen zugeordnet ist, gemäß der Warteliste,
• die Verfolgung jedes Senders, der gemäß der Verfolgungsliste identifiziert wurde, wenn die Warteliste leer ist.

## Claims

1. A system (100) for intercepting non-discursive electromagnetic signals transmitted in a first frequency band, referred to as broadband, the system comprising:
- an antenna system (110) configured to intercept electromagnetic signals transmitted in a given operating band included in the broadband;
- a first receiver (120), referred to as a narrowband receiver, coupled to the antenna system (110) and configured to, during a first predetermined analysis period,
• detect at least one pulse in the electromagnetic signals intercepted by the antenna system (110), and
• generate at least one pulse descriptor for each detected pulse, the pulse descriptor comprising information content that characterizes the pulse; and
- a processor (130) coupled to the antenna system (110) and to the first narrowband receiver (120), and configured to:
• functionally split all or part of the broadband into a plurality of frequency band fractions,
• control the antenna system (110) to cyclically scan the plurality of frequency band fractions by successively adapting, during the first predetermined analysis duration, the operating band of the antenna system (110) to at least one adjacent current frequency band fraction, and
• attempt to identify, from at least one pulse descriptor, at least one transmitter associated with the electromagnetic signals intercepted by the antenna system (110);
wherein:
- the width of the operating band of the first narrowband receiver (120) is substantially less than the width of the broadband and substantially equal to the width of each adjacent frequency band fraction, and
- the first predetermined analysis duration is not sufficient for the first narrowband receiver (120) to be able to generate at least one transmitter descriptor, the transmitter descriptor comprising information content that characterizes a transmitter of the electromagnetic signals transmitted,
**characterized in that** said system further comprises a second receiver (140), referred to as a narrowband receiver, coupled to the antenna system (110) and to the processor (130), the second narrowband receiver (140) being configured to, during a second predetermined analysis duration, generate at least one transmitter descriptor, wherein said processor (130) is further configured to
- select at least one pulse descriptor that has not made it possible to identify a transmitter associated with the electromagnetic signals intercepted by the antenna system (110), the pulse descriptor comprising coarse information regarding the direction of arrival of the associated electromagnetic signals intercepted by the antenna system (110),
- control the antenna system (110) to intercept the electromagnetic signals transmitted in a direction that corresponds to the coarse information regarding the direction of arrival,
- attempt to identify, from the transmitter descriptor, at least one transmitter associated with the electromagnetic signals intercepted by the antenna system (110);
wherein
- the width of the operating band of the second narrowband receiver (140) is substantially equal to the width of the operating band of said first narrowband receiver (120), and
- the second predetermined analysis duration is substantially greater than the first predetermined duration so that the second narrowband receiver (140) can generate at least one transmitter descriptor.

2. The system (100) according to claim 1, wherein the processor (130) is further configured to attempt to identify a transmitter from a list of pulse descriptors associated with previously identified transmitters.

3. The system (100) according to either of the preceding claims, wherein the processor (130) is further configured to stop the attempt to identify a transmitter after a predetermined attempt period.

4. The system (100) according to any of the preceding claims, wherein the second narrowband receiver (140) is configured to, during a third predetermined analysis duration, generate at least one transmitter descriptor, wherein the processor (130) is further configured to
- select at least one pulse descriptor associated with each identified transmitter, the pulse descriptor comprising coarse information regarding the direction of arrival of the associated electromagnetic signals intercepted by the antenna system (110),
- control the antenna system (110) to intercept the electromagnetic signals transmitted in a direction that corresponds to the coarse information regarding the direction of arrival,
- track each transmitter identified from the transmitter descriptor, wherein the third predetermined analysis duration is less than the second predetermined duration and greater than the first predetermined duration.

5. The system (100) according to the preceding claim, wherein the processor (130) is further configured to start the tracking of each identified transmitter when the processor (130) no longer has a transmitter to be identified.

6. The system (100) according to any of the preceding claims, wherein the processor (130) is further configured to control the scanning of the antenna system (110) so as to maintain the operating band of the antenna system (110) in the current adjacent frequency band fraction for a predetermined scanning period.

7. The system (100) according to any of the preceding claims, wherein the width of the operating band of the first narrowband receiver (120) and the second narrowband receiver (140) is between 500 MHz and 4 GHz, preferably equal to 3 GHz.

8. The system (100) according to any of the preceding claims, wherein the width of the broadband ranges between 1 GHz and 18 GHz.

9. The system (100) according to any of the preceding claims, wherein the antenna system (110) comprises a plurality of antennas divided into groups, each group of antennas being arranged according to a shape selected from the group consisting of a semicircle and a half-hexagon.

10. The system (100) according to any of the preceding claims, wherein the first narrowband receiver (120) and the second narrowband receiver (140) are superheterodyne receivers.

11. The system (100) according to any of the preceding claims, further comprising a display device (150) coupled to the processor (130) and configured to show at least one transmitter identified from at least one transmitter descriptor.

12. A method (200) comprising:
- a step of providing (210) a system according to any of the preceding claims for intercepting non-discursive electromagnetic signals transmitted in broadband,
- a step of comparing (220) pulse descriptors generated by the first narrowband receiver (120) with a list of transmitter descriptors associated with previously identified transmitters,
- a step of inserting (230) pulse descriptors into a waiting list or into a tracking list on the basis of the comparison, the pulse descriptors comprising coarse information regarding the direction of arrival of the associated electromagnetic signals intercepted by the antenna system (110), the step of inserting (230) comprising
• inserting into the waiting list pulse descriptors that have not made it possible to identify a transmitter associated with the electromagnetic signals intercepted by the antenna system (110),
• inserting into the tracking list pulse descriptors that have made it possible to identify a transmitter associated with the electromagnetic signals intercepted by the antenna system (110), and
- a step of using (240) the processor (130), comprising,
• attempting to identify, according to the waiting list, at least one transmitter associated with the electromagnetic signals intercepted by the antenna system (110),
• when the waiting list is empty, tracking each transmitter identified according to the tracking list.
